# EUROPEAN PATENT SPECIFICATION

(11) **EP 0 421 659 B1**
(45) Date of publication and mention of the grant of the patent: **10.07.1996**
(21) Application number: 90310495.8
(22) Date of filing: 25.09.1990
(51) Int. Cl.: C08F 12/04, C08F 10/00, C08F 4/74

(54) **Process for preparation of syndiotactic vinyl aromatic polymers**
Verfahren zur Herstellung eines syndiotaktischen vinylaromatischen Polymers
Procédé de préparation d'un polymère vinyl-aromatique syndiotactique

(30) Priority: 29.09.1989 US 414846; 22.03.1990 US 498162; 30.07.1990 US 559475
(43) Date of publication of application: 10.04.1991
(73) Proprietor: THE DOW CHEMICAL COMPANY, Midland, Michigan 48640 (US)
(72) Inventor: Campbell, Richard E. Jr., Midland, Michigan 48640 (US)
(74) Representative: Burford, Anthony Frederick

(56) References cited:
- EP-A- 210 615
- EP-A- 416 815
- EP-A- 418 044
- EP-A- 0 224 097
- EP-A- 0 277 004
- EP-A- 0 418 044

## Description

The present invention relates to a process for polymerizing vinyl aromatic monomers, such as styrene, to produce polymers having a high degree of syndiotacticity, and more particularly to a process for preparing polymers of vinyl aromatic monomers having a high degree of syndiotacticity using an alkylaluminoxane-free catalyst. Such polymers may be usefully employed in the preparation of solid objects and articles such as a moldings, films, sheets and foamed objects by molding, casting or the like process.

In US-A-4,680,353 there is disclosed a process for the preparation of polymers of vinyl aromatic monomers having a stereoregular structure of high syndiotacticity by the use of certain coordination catalysts. Particularly disclosed were the reaction products of a titanium compound and an organoaluminum compound, especially polymethylaluminoxane. The process disclosed in this patent, however, requires the use of large amounts of the polymethylaluminoxane which is very expensive and difficult to make due to its very complex structure. Also, this process requires an expensive polymer purification system to remove remaining catalyst components due to the use of large amounts of the polymethylaluminoxane.

In EP-A-0277004 there are disclosed certain bis(cyclopentadienyl) metal compounds formed by reacting a bis(cyclopentadienyl) metal complex with salts of Bronsted acids containing a non-coordinating compatible anion. The reference discloses the fact that such complexes are usefully employed as catalysts in the polymerization of olefins.

EP-A-0418044 (published on 20th March 1991 in pursuance of European Patent Application No. 90309962.0 filed 12th September 1990 designating BE, DE, ES, FR, GB, IT, NL & SE and claiming priority from US Patent Applications Nos. 407169 filed 14th September 1989 and 547728 filed 3rd July 1990) discloses addition polymerization catalysts comprising a monocyclopentadienyl or substituted monocyclopentadienyl metal complex containing compound corresponding to the formula:

CpMXₙ⁺A⁻

wherein:
Cp is a single η⁵-cyclopentadienyl or η⁵-substituted cyclopentadienyl group optionally covalently bonded to M through a substituent;
M is a metal of Groups 3-10 or the Lanthanide Series of the Periodic Table bound in an η⁵ bonding mode to the cyclopentadienyl or substituted cyclopentadienyl group;
X each occurrence is hydride or a moiety selected from halo, alkyl, aryl, silyl, germyl, aryloxy, alkoxy, amide, siloxy, and combinations thereof having up to 20 non-hydrogen atoms, and neutral Lewis base ligands having up to 20 non-hydrogen atoms; or optionally one X together with Cp forms a metallocycle with M of up to 20 non-hydrogen atoms;
n is 1 or 2 depending on the valence of M; and
A⁻ is a noncoordinating, compatible anion of a Bronsted acid salt.

The catalysts of EP-A-0418044 are stated to be of use to polymerize α-olefins and/or acetylenically unsaturated monomers having from 2 to 18 carbon atoms and/or diolefins having from 4 to 18 carbon atoms either alone or in combination. They may also be used to polymerize α-olefins, diolefins and/or acetylenically unsaturated monomers in combination with other unsaturated monomers. In a preferred embodiment the catalysts are employed to prepare copolymers of mixtures of vinyl aromatic monomers with olefins other than a vinyl aromatic monomer, especially copolymers of styrene with ethylene or propylene.

EP-A-0416815 (published on 13th March 1991 in pursuance of European Patent Application No. 90309496.9 filed 30th August 1990 designating AT, BE, DE, ES, FR, GB, IT, NL & SE and claiming priority from US Patent Applications Nos. 401344 filed 31st August 1989, 401345 filed 31st August 1989, 428082 filed 27th October 1989, 428283 filed 27th October 1989, 428276 filed 27th October 1989, 436524 filed 14th November 1989, and 545403 filed 3rd July 1990) discloses addition polymerization catalysts comprising (a) a metal coordination complex comprising a metal of Group 3 (other than scandium), 4-10 or the lanthanide series of the Periodic Table of the Elements and a delocalized π-bonded moiety substituted with a constrain-inducing moiety, said complex having a constrained geometry about the metal atom such that the angle at the metal between the centroid of the delocalized, substituted π-bonded moiety and the center of at least one remaining substituent is less than such angle in an comparative complex differing only in that said constrain-inducing substituent is replaced by hydrogen, and provided that for such complexes comprising more than one delocalized, substituted π-bonded moiety, only one thereof for each metal atom of the complex is a cyclic, delocalized, substituted π-bonded moiety and (b) an activating cocatalyst.

Preferably the delocalized π-bonded moiety is a cyclopentadienyl or substituted cyclopentadienyl group forming a portion of a ring structure wherein the metal is both bonded to an adjacent covalent moiety and is held in association with the delocalized π-bonded moiety through η⁵ bonds.

The catalysts of EP-A-0416815 are stated to be of use to polymerize α-olefins, diolefins, hindered vinylidene aliphatic monomers, vinylidene aromatic monomers and mixtures thereof. In one embodiment the catalysts are employed to prepare copolymers of mixtures of vinylidene aromatic monomers with α-olefins, especially copolymers of styrene with ethylene.

According to the present invention there is now provided a process for preparing a syndiotactic polymer of a vinyl aromatic monomer said process comprising contacting at least one polymerizable vinyl aromatic monomer under polymerization conditions with a catalyst characterized in that the catalyst comprises a metal complex of the formula:

[CpₘMXₙX'ₚ]⁺A⁻

wherein:
Cp is a single η⁵-cyclopentadienyl group or a η⁵-substituted cyclopentadienyl group which may optionally also be bonded to M through a substituent;
M is a metal of Group 3, 4, 5, 6, 8, 9, 10 or the Lanthanide Series of the Periodic Table;
each X independently is an inert anionic ligand or a group of formula R, with the provisio that at least one X is R;
X' is an inert, neutral donor ligand;
each R independently is hydride, or is hydrocarbyl or silyl, optionally substituted with one or more halogen atoms or alkoxy groups, and having up to 20 carbon and/or silicon atoms;
m and p are independently 0 or 1;
n is an integer greater than or equal to 1; and
the sum of m and n is one less than the valence of M, or when Cp is optionally bonded to M through a substituent, the sum of m and n is two less than the valence of M; and
A⁻ is a compatible noncoordinating anion.

As used herein, the term "syndiotactic" when used to refer to a polymer, indicates a polymer of which greater than 50 percent and preferably greater that 75 percent of the triads present are syndiotactic, as determined by C¹³ nuclear magnetic resonance spectroscopy. Such polymers may be usefully employed in the preparation of articles and objects (e.g., via compression molding, injection molding or other suitable technique) having an extremely high resistance to deformation due to the effects of temperature.

Examples of R include aralkyl, alkaryl, haloalkyl, silylalkyl, haloalkyl, haloaryl, haloalkaryl, halosilyl, haloalkarylsilyl, and alkoxyalkyl.

The term "inert" means noninterfering with the desired catalyst preparation or with the use of the resulting metal complex containing compound as a polymerization catalyst.

Illustrative but nonlimiting examples of X include R, halo, NR₂, PR₂, OR, SR, and BR₂.

Illustrative but nonlimiting examples of X' include ROR, RSR, NR₃, PR₃, and C₂₋₂₀ olefin or diolefins.

Such donor ligands are able to form shared electron bonds but not a formal covalent bond.

The catalytically effective ingredients of the catalysts used in the present invention are prepared by combining at least two components as hereinafter disclosed. The first component is a derivative of a metal of Group 3, 4, 5, 6, 8, 9, 10 or the Lanthanide Series of the Periodic Table of the Elements containing at least one substituent which will combine with the cation of a second component (described hereinafter) or alternatively which is subject to oxidative activation as hereinafter described. The first component additionally must be capable of forming a cation formally having a coordination number that is one less than its valence. The second component is a salt of noncoordinating compatible anion, in particular a salt of such an anion with a Bronsted acid and or with an oxidizing cation.

All reference to the Periodic Table of the Elements herein shall refer to the Periodic Table of the Elements, published and copyrighted by CRC Press, Inc., 1989. Also, any reference to a Group or Series shall be to the Group or Series as reflected in this Periodic Table of the Elements, utilizing the IUPAC system for numbering groups.

As used herein, the recitation "noncoordinating, compatible anion" means an anion which either does not coordinate with the first component or a derivative thereof; or which is only weakly coordinated to said component thereby remaining sufficiently labile to be displaced by the vinyl aromatic monomer to be polymerized. The recitation "noncoordinating, compatible anion" specifically refers to an anion which when functioning as a charge balancing anion in the catalyst system of this invention does not transfer an anionic substituent or fragment thereof to the cationic portion of the catalyst. Compatible anions are also anions which are not degraded to neutrality under the reaction conditions of the present invention.

Cyclopentadienyl and substituted cyclopentadienyl groups for use according to the present invention are more specifically depicted by the formula: 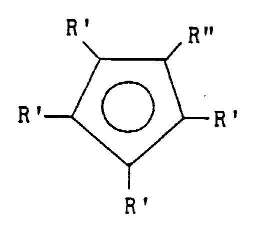 wherein:
each R' independently is hydrogen, halogen, R, NR₂, PR₂; OR; SR or BR₂, wherein R is as previously defined; and
R" is a group of the formula R' as defined above or a divalent group of from 2 to 7 nonhydrogen atoms that is covalently bonded to M.

Preferably, R' is alkyl or haloalkyl of up to 6 carbons, and preferably R" is alkyl or haloalkyl of up to 6 carbons or C₂₋₅ oxyalkylene or alkylene.

Illustrative, but not limiting examples of metal derivatives (first components) which may be used in the preparation of the compounds of this invention are derivatives of titanium, zirconium, hafnium, chromium, and lanthanum.

More preferably such metal derivative compounds are those having organyl substituents that are either devoid of reactive hydrogens or wherein potentially reactive hydrogens are protected by bulky protecting groups. Illustrative, but not limiting examples of suitable metal derivative compounds include: tetranorbornenyl titanium, tetrabenzyl zirconium, tetraneopentyl titanium, (cyclopentadienyl)dimethyl(isopropoxy)titanium, (cyclopentadienyl)dibenzyl(isopropoxy)titanium, (cyclopentadienyl)dibenzyl(phenoxy)zirconium, (cyclopentadienyl)dibenzyl(isopropoxy)hafnium, (cyclopentadienyl)dimethylzirconium chloride, (cyclopentadienyl)methylyttrium chloride, bis(phenoxy)di(trimethylsilyl)zirconium, phenoxytrimethylzirconium, bis(2,6-diisopropyl-4-methyl)phenoxy)dibenzyltitanium, bis(2,4,6-trimethylphenoxy)dibenzyltitanium, tri(tertiary butyl)siloxytrimethyl zirconium, bismethoxy-di(phenylmethyl)titanium, bis(2,4,6-trimethylphenoxy) dibenzyltitanium, triphenoxybenzyltitanium, bis(2,4,6-trimethylphenoxy)propylscandium, butoxytris((trimethylsilyl)methyl)zirconium, dimethoxydimethylzirconium, 4-(1-methyl-1-(4-methoxyphenyl)ethyl)phenoxy tribenzyl titanium, dinorborneyldichlorotitanium, tribenzyltitanium hydride, cyclopentadienyltribenzylzirconium, cyclopentadienyltribenzyltitanium, cyclopentadienyltrimethyltitanium, cyclopentadienyltrimethylzirconium, cyclopentadienyltrineopentyltitanium, cyclopentadienyltri(diphenylmethyl)zirconium, cyclopentadienyltriphenylzirconium, cyclopentadienyltrineopentylzirconium, cyclopentadienyldi(m-tolyl)zirconium, cyclopentadienyldi(p-tolyl)zirconium, cyclopentadienyltrimethyltitanium hydride, and cyclopentadienyltridiphenylmethylzirconium; hydrocarbyl-substituted cyclopentadienyl compounds such as pentamethylcyclopentadienyltrimethylzirconium, ethylcyclopentadienyltrimethylzirconium, pentamethylcyclopentadienyltribenzylzirconium, n-butylcyclopentadienyltrineopentyltitanium, (t-butylcyclopentadienyl)tri(trimethylsilyl)zirconium, cyclohexylcyclopentadienyldimethylzirconium, (pentamethylcyclopentadienyl)dimethylzirconium chloride, indenyldibenzyltitanium chloride, (pentamethylcyclopentadienyl)diisopropoxyhafnium chloride, (benzylcyclopentadienyl)di(m-tolyl) titanium chloride, (diphenylcyclopentadienyl)dinorborneylzirconium chloride, methylcyclopentadienyltriphenylzirconium, tetraethylcyclopentadienyltribenzylzirconium, propylcyclopentadienyltrimethylzirconium, propylcyclopentadienyltrimethylzirconium, (n-butylcyclopentadienyl) dimethyl(n-butoxy)titanium, cyclopentadienyldiphenylisopropoxyzirconium, cyclohexylmethylcyclopentadienyltribenzylzirconium, cyclohexylmethylcyclopentadienyltrimethylzirconium, cyclopentadienylzirconium dihydride, benzylcyclopentadienyldimethylhafnium, indenyltribenzylzirconium, trimethylsilylcyclopentadienyltrimethylzirconium, trimethylgermylcyclopentadienyl)trimethyltitanium, trimethylstannylcyclopentadienyltribenzylzirconium, (pentatrimethylsilyl)cyclopentadienyltrimethylzirconium, trimethylsilylcyclopentadienyltrimethylzirconium, penta(trimethylsilyl)cyclopentadienyltribenzyltitanium, trimethylgermylcyclopentadienyltriphenylhafnium, cyclopentadienylbis(p-tolyl)scandium, cyclopentadienyldibenzylchromium, pentamethylcyclopentadienylbis(trimethylsilylmethyl)yttrium, pentamethylcyclopentadienylbis(trimethylsilylmethyl)scandium, and pentamethylcyclopentadienylbis(trimethylsilyl)lanthanum; halogen-substituted cyclopentadienyl compounds such as trifluoromethylcyclopentadienyltrimethylzirconium, trifluoromethylcyclopentadienyltrinorborneylzirconium, and trifluoromethylcyclopentadienyltribenzylzirconium; silyl-substituted (cyclopentadienyl)metal compounds such as cyclopentadienyltrimethylsilylzirconium, and cyclopentadienyltri(phenyldimethylsilyl)zirconium.

Preferred components are titanium or zirconium compounds.

Compounds useful as a second component in the preparation of the catalyst used in this invention may, in one embodiment, comprise a cation, which is a Bronsted acid capable of donating a proton, and a compatible, noncoordinating anion. In another embodiment such compounds comprise an oxidizing cation and a compatible, noncoordinating anion. Preferred anions are those containing a single coordination complex comprising a charge-bearing metal or metalloid core which anion is relatively large (bulky), capable of stabilizing the active catalyst species (the Group 3, 4, 5, 6, 8, 9, 10 or Lanthanide Series cation) formed when the two components are combined, and which will be sufficiently labile to be displaced by the polymerizable vinyl aromatic monomer.

The term "metalloid", as used herein, includes non-metals such as boron, and phosphorus which exhibit semi-metallic characteristics. Suitable metals, include, but are not limited to, aluminum, gold, and platinum. Suitable metalloids include, but are not limited to, boron, phosphorus, and silicon. Compounds containing anions which comprise coordination complexes containing a single metal or metalloid atom are, of course, well known. In light of this, salts containing anions comprising a coordination complex containing a single boron atom are preferred.

Preferably, second components useful in the preparation of the catalysts used in this invention may be represented by the following general formulas:

(L-H)⁺[A]- (I)

or

Ox⁺[A^{*}]⁻ (II)

wherein:
L is a neutral Lewis base;
(L-H)⁺ is a Bronsted acid;
[A]- is a compatible, noncoordinating anion;
Ox⁺ is an organic or metallic oxidizing cation; and
[A*]⁻ is a compatible, noncoordinating, inert, anion.

By the term "inert" as employed above is meant that A* of formula (II) comprises an anion which is a single coordination complex comprising a plurality of lipophilic radicals covalently coordinated to and shielding a central formally charge-bearing metal or metalloid atom, which anion is bulky and stable under the oxidation and subsequent polymerization conditions, and which anion is compatible with and noncoordinating towards the resulting polymerization catalyst. The anion is employed only to provide charge balance without interfering with the oxidizing ability of Ox⁺.

Anions comprising boron which are particularly useful as [A^{*}]⁻ may be represented by the following general formula:

[BX₁X₂X₃X₄]⁻

wherein:
B is boron in a valence state of 3;
X₁ to X₄ are the same or different nonreactive, organyl or silyl radicals containing from 1 to 20 carbon or silicon atoms. In addition two or more of X₁ to X₄ may be linked to each other through a stable bridging group. Preferably X₁ to X₄ lack reactive hydrogen moieties. That is, the radicals are either devoid of hydrogen, contain only hydrogen in nonactivated positions or contain sufficient steric hinderence to protect potentially active hydrogen sites. Examples of suitable radicals for X₁ to X₄ are perfluorinated hydrocarbyl radicals containing from 1 to 20 carbon atoms, 3,4,5-trifluorophenyl, and 3,4-di(trifluoromethyl)phenyl.

A most highly preferred compatible, non-coordinating, inert, anion for use in compounds corresponding to formula (II) is tetra(pentafluorophenyl)borate.

Suitable oxidizing cations include organic and inorganic cations having sufficient electronegativity to oxidize the metal derivatives. Organic oxidizing cations for use in the compounds corresponding to formula (II) include ferrocenium ions, indenium ions and cationic derivatives of substituted ferrocene, and indene. Suitable metallic oxidizing cations include Ag⁺¹, Pd⁺², Pt⁺², Hg⁺², Hg₂⁺², Au⁺ and Cu⁺. The process of the invention involves a molecular oxidation. The Group 3, 4, 5, 6, 8, 9, 10 or Lanthanide metal is previously fully oxidized. Highly preferred oxidizing cations have an oxidation potential of at least ⁺0.20 volt and preferably at least ⁺0.25 volt. Most highly preferred oxidizing cations are ferrocenium and Ag⁺¹ cations.

Without wishing to be bound by any particular theory of operation it is believed that the oxidizing cation causes the molecular oxidation of the metal derivative, and in the process becomes a neutral species. The oxidized metal derivative loses a hydrogen or hydrocarbyl radical (·R) by a unimolecular elimination reaction. Two or more such radicals form a hydrogen molecule or a neutral organic species of the formula R(̵Rₓ) where x is an integer. These byproducts are neutral or noninterfering with any subsequent polymerization reaction and may also be removed from the reaction mixture. The preparation technique is analogous to that previously disclosed by R. Jordan, et al., J. A. C. S., 109, 4111-4113 (1987).

Illustrative, but not limiting, examples of oxidizing agents according to formula (II) are ferrocenium tetra(pentafluorophenyl)borate, gold (I) tetrakis 3,4,5-trifluorophenyl borate, silver tetra(pentafluorophenyl) borate, and 1,1'-dimethylferrocenium tetrakis 3,5-bistrifluoromethylphenyl borate.

Returning to above formula (I), preferably A⁻ corresponds to the formula:

[M'Q_{n'}]⁻

wherein:
M' is a metal or metalloid selected from Groups 5-15 of the Periodic Table of the Elements;
each Q independently is hydride, dialkylamido, halide, alkoxide, aryloxide, hydrocarbyl, or substitutedhydrocarbyl containing up to 20 carbon atoms with the proviso that in not more than one occurrence is Q halide; and
n' is an integer from 2 to 8.

Second components comprising boron are particularly useful in the preparation of catalysts of formula (I) and may be represented by the following general formula:

[L-H]⁺[BQ₄]⁻

wherein:
L is a neutral Lewis base;
[L-H]⁺ is a Bronsted acid;
B is boron in a valence state of 3; and
Q is as previously defined.

Illustrative, but not limiting, examples of boron compounds which may be used as a second component in formula (I) are trialkyl-substituted ammonium salts such as triethylammonium tetraphenylborate, tripropylammonium tetraphenylborate, tri(n-butyl)ammonium tetraphenylborate, trimethylammonium tetra(p-tolylborate), tributylammonium tetrakis-pentafluorophenylborate, tripropylammonium tetrakis-2,4-dimethylphenylborate, tributylammonium tetrakis-3,5-dimethylphenylborate, and triethylammonium tetrakis-(3,5-ditrifluoromethylphenyl)borate. Also suitable are N,N-dialkyl anilinium salts such as N,N-dimethylanilinium tetraphenylborate, N,N-diethylanilinium tetraphenylborate, and N,N-2,4,6-pentamethylanilinium tetraphenylborate; dialkyl ammonium salts such as di-[i-propyl)ammonium tetrakispentafluorophenylborate, and dicyclohexylammonium tetraphenylborate; and triaryl phosphonium salts such as triphenylphosphonium tetraphenylborate, tri(methylphenyl)phosphonium tetrakis-pentafluorophenylborate, and tri(dimethylphenyl)phosphonium tetraphenylborate.

In general, the catalyst can be prepared by combining the two components in a suitable solvent at a temperature of from -100°C to 300°C. The catalyst system can also form *in situ* if the components thereof are added directly to the polymerization process and a suitable solvent or diluent, including condensed monomer, is used in said polymerization process. It is, however, preferred to form the catalyst in a separate step in a suitable solvent prior to adding the same to the polymerization step. The catalysts' components are generally sensitive to both moisture and oxygen and should be handled and transferred in an inert atmosphere such as nitrogen, argon or helium.

As previously indicated, the improved catalyst of the present invention will, preferably, be prepared in a suitable solvent or diluent. Suitable solvents or diluents include straight and branched-chain hydrocarbons such as C₆₋₁₂ alkanes (eg. hexane, heptane, and octane); C₆₋₁₂ cyclic and alicyclic hydrocarbons such as cyclohexane, cycloheptane, methylcyclohexane, and methylcycloheptane and C₆₋₁₂ aromatic and alkyl-substituted aromatic compounds such as benzene, toluene, xylene, and decalin, and mixtures thereof.

The catalysts may be employed as homogeneous catalysts or supported on the surface of a suitable support such as alumina or silica.

In general, catalysts according to the present invention can be selected so as to produce polymer products that will be free of certain trace metals generally found in polymers produced with Ziegler-Natta type catalysts containing cocatalysts such as aluminum or magnesium based compounds.

In a highly preferred embodiment of the present invention Cp is pentamethylcyclopentadiene, m is zero or one, M is titanium or zirconium, n is two or three, p is zero, X is R or OR, and A is tetrakis-pentafluorophenyl borate. In a most preferred embodiment X is C₁₋₂₀ alkyl, aryl, aralkyl, phenoxyalkoxy and m is 0 or 1.

Suitable vinyl aromatic monomers which can be polymerized in the process of the present invention include those represented by the formula: 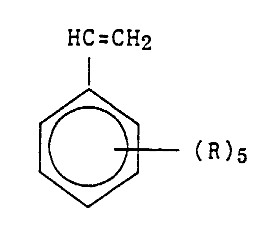 wherein each R is independently hydrogen; an aliphatic, cycloaliphatic or aromatic hydrocarbon group having from 1 to 10, more suitably from 1 to 6, most suitably from 1 to 4, carbon atoms; or a halogen atom. Examples of such monomers include, styrne, chlorostyrene, p-methylstyrene, n-butyl styrene, and p-vinyl toluene with styrene being especially suitable. Copolymers of styrene and the above vinyl aromatic monomers other than styrene can also be prepared.

The polymerization may be conducted under slurry, bulk or suspension polymerization conditions or other suitable reaction conditions including solid, powdered reaction conditions. The polymerization can be conducted at temperatures of from 0°C to 160°C, preferably from 25°C to 100°C, more preferably from 30°C to 80°C, for a time sufficient to produce the desired polymer. Typical reaction times are from one minute to 100 hours, preferably from 1 to 10 hours. The optimum reaction time or reactor residence time will vary depending upon the temperature, solvent and other reaction conditions employed. The polymerization can be conducted at subatmospheric pressure as well as superatmospheric pressure, suitably at a pressure within the range of 1 to 500 psig (100 kPa-3,400 kPa). The use of ambient or low pressures, e.g., 1-5 psig (100-130 kPa) is preferred in view of lower capital and equipment costs.

The polymerization may be conducted in the presence of an inert diluent or solvent or in the absence thereof, i.e., in the presence of excess monomer. Examples of suitable diluents or solvents include C₆₋₂₀ aliphatic, cycloaliphatic, aromatic and halogenated aliphatic or aromatic hydrocarbons, as well as mixtures thereof. Preferred diluents comprise the C₆₋₁₀ alkanes, toluene and mixtures thereof. A particularly desirable diluent for the polymerization is iso-octane, iso-nonane or blends thereof such as Isopar-E®, available from Exxon Chemical Company. Suitable amounts of solvent are employed to provide a monomer concentration from 5 percent to 100 percent by weight.

The molar ratio of the vinyl aromatic monomer to the catalyst (in terms of metal) may range from 100:1 to 500,000:1, preferably from 3,500:1 to 200,000:1. In the case of using a solvent, the catalyst may be used at a concentration with the range from 10⁻⁷ to 10⁻¹ moles per liter of solvent.

As in other similar polymerizations it is highly desirable that the monomers and solvents employed be of sufficiently high purity that catalyst deactivation does not occur. Any suitable technique for monomer purification such as devolatilization at reduced pressures, contacting with molecular sieves or high surface area alumina, or deaeration may be employed. In addition a small amount of an aluminum trialkyl compound or similar scavenger may be added to the reaction mixture to protect the catalyst from deactivation by contaminants in the reaction mixture.

Purification of the resulting polymer to remove entrained catalyst may also be desired by the practitioner. Purification of the resulting polymer prepared by the process of this invention is much easier than a conventional process since the process of this invention does not use polyalkylaluminoxane which is used in large quantities as cocatalyst in the conventional process. Entrained catalyst may generally be identified by residues of ash on pyrolysis of the polymer that are attributable to catalyst metal values. A suitable technique for removing such compounds is by solvent extraction, e.g., extraction utilizing hot, high boiling chlorinated solvents, acids or bases such as caustic followed by filtration.

Having described the invention, the following examples are provided as further illustrative and are not to be construed as limiting. Unless stated to the contrary, all parts and percentages are based on weight.

### Example 1

### Preparation of Catalyst

In a flask, 0.10 gm of pentamethylcyclopentadienyltitanium trimethyl was added to a suspension of 0.343 gm of tri(ethyl)ammonium tetra(pentafluorophenyl)borate in 10 ml of toluene at room temperature. The obtained mixture was allowed to stir for 10 hours, and then heated to 45°C for one hour. No precipitate was observed since the mixture was a very dark solution. The toluene solvent was stripped off *in-vacuo* thereby leaving a black solid. This solid was washed 3 times with 5 ml of petroleum ether and dried *in-vacuo*. The product comprised a composition having a structure as identified by ¹³C NMR of the formula:

[Cp*TiMe₂]⁺[B(C₆F₅)₄]⁻

### Preparation of Syndiotactic Polystyrene

A dry 20 ml vial was charged with 0.025 gm (28 umole) of the above catalyst and then 10.0 gm (102.9 mmol) of styrene was added. The vial was capped with a PTFE coated septum and a metal crimp cap, and shaken until most of the catalyst was dissolved. The vial was placed in a 70°C water bath for 3 hours and then the vial was taken out from the water bath and the polymerization was stopped by the addition of methanol. The off-white, insoluble product was washed with methanol and dried *in-vacuo* to obtain 3.32 gm of a resultant polymer. The resultant polymer was insoluble in methylene chloride or other common solvents for atactic polystyrene.

The resultant polystyrene had a melting point of 268°C (by DSC) and syndiotacticity of greater than 95 percent by ¹³C analysis. The polymer had a weight average molecular weight (Mw) of 382,000.

### Examples 2-11

The reaction conditions of Example 1 were substantially repeated excepting that various catalysts and reactant ratios were employed. Accordingly, a dry 20 ml vial was charged with the catalyst further described in Table I. Styrene was added, the vial was capped with a PTFE coated septum and a metal crimp cap, and shaken until the mixture had mostly dissolved or the mixture gelled, rendering further mixing impossible. The vial was placed in a 70°C water bath for 3 hours and then the vial was taken out from the water bath and the polymerization stopped by the addition of methanol. The off white, insoluble polymer was washed with methanol and dried *in-vacuo*. In all cases the polymer was insoluble in methylene chloride and other common solvents for atactic polystyrene. Crystalline melting points were determined by differential scanning calorimetry, DSC. Syndiotacticities were determined by ¹³C NMR analysis. Results are contained in Table I.

**Table I**

| Example | Complex^{a} | Mole Ratio Sty:Ti | Temp °C | Time h | % Yield | % Syndio | DSC °C | Mw x 10³ |
|---|---|---|---|---|---|---|---|---|
| 2 | CMTTB | 3700:1 | RT | 4.0 | 10.4 | >95 | 263 | 544 |
| 3 | CBTTB | 7500:1 | 70 | 1.5 | 24.1 | >95 | 270 | --- |
| 4 | CBTTB | 7500:1 | 70 | 4.0 | 38.0 | >95 | 269 | --- |
| 5 | CBTTB^{b} | 7500:1 | 70 | 4.0 | 4.5 | -- | 260 | --- |
| 6 | CBTTB^{c} | 7500:1 | 70 | 4.0 | 1.4 | -- | 267 | --- |
| 7 | CBTTB | 10000:1 | 70 | 2.0 | 20.9 | -- | 270 | 584 |
| 8 | CSTTB | 7500:1 | 70 | 1.5 | 8.6 | -- | 270 | 340 |
| 9 | CTBOMB | 10000:1 | 70 | 2.0 | 10.0 | -- | 270 | --- |
| 10 | CBTTB^{d} | 10000:1 | 70 | 2.0 | 49.8 | -- | 266 | --- |
| 11 | CBTTB^{de} | 10000:1 | 70 | 2.0 | 32.9 | -- | 265 | --- |

| | | | | | | | | |
|---|---|---|---|---|---|---|---|---|
| a) CMTTB= cyclopentadienyldimethyltitanium tetra(pentafluorophenyl)borate, (Cp*Ti(CH₃)₂⁺TB⁻), CBTTB= cyclopentadienyldibenzyltitanium tetra(pentafluorophenyl)borate (Cp*Ti(CH₂C₆H₅)₂⁺TB⁻), CSTTB= cyclopentadienyldi(trimethylsilylmethyl)titanium tetra(pentafluorophenyl)borate (Cp*Ti(CH₂Si(CH₃)₃)₂⁺TB⁻), CTBOMB= cyclopentadienylbenzylmethoxytitanium tetra(pentafluorophenyl)borate (Cp*Ti(CH₂C₆H₅)(OCH₃)⁺TB⁻) | | | | | | | | |
| b) 2 ml of o-dichlorobenzene added | | | | | | | | |
| c) 2 ml of chloroform added | | | | | | | | |
| d) prepared from diisopropylethylammonium tetra(pentafluoro)boron e) unwashed catalyst | | | | | | | | |

### Examples 12-15

The reaction conditions of Example 1 were substantially repeated excepting that an aluminum trialkyl compound was also present in the reaction mixture. Accordingly, a dry 20 ml vial was charged with the catalyst further described in Table II. (The catalysts were prepared according to the technique of Example 1 or (in Example 15) by contacting in equimolar quantities monocyclopentadienyltitaniumtribenzyl with ferrocenium tetra(pentafluorophenyl)borate in toluene.) To a second vial styrene and an aluminum trialkyl compound (in 1M toluene solution) were combined. This solution was added to the vial containing the titanium complex, capped with a PTFE coated septum and a metal crimp cap, and shaken until the mixture had mostly dissolved or the mixture gelled rendering further mixing impossible. The vial was placed in a 70°C water bath for 2 hours and then the vial was taken out from the water bath and the polymerization stopped by the addition of methanol. The off white, insoluble polymer was washed with methanol and dried *in-vacuo*. In all cases the polymer was insoluble in methylene chloride and other common solvents for atactic polystyrene. Crystalline melting points were determined by differential scanning calorimetry, DSC.
Syndiotacticities were determined by C¹³ NMR analysis. Results are contained in Table II.

**Table II**

| Example | Complex^{a} | Mole Ratio Styrene:Al:Ti | Temp °C | Time h | % Yield | % Syndio | DSC °C | Mw x 10³ |
|---|---|---|---|---|---|---|---|---|
| 12 | CTBB^{b} | 10000:20:1 | 70 | 2 | 29.4 | --- | 266 | 287 |
| 13 | CTBB^{c} | 10000:18:1 | 70 | 1.5 | 76.2 | --- | 269 | 92 |
| 14 | CTBB^{d} | 65000:9:1 | 70 | 1.5 | 26.6 | --- | 270 | 690 |
| 15 | CTBB^{d} | 39000:20:1 | 70 | 1.5 | 67.2 | --- | 269 | 604 |

| | | | | | | | | |
|---|---|---|---|---|---|---|---|---|
| a) CTBB= cyclopentadienyltitaniumdibenzyl tetra(pentafluorophenyl)borate | | | | | | | | |
| b) trimethylaluminum added to reaction | | | | | | | | |
| c) triethylaluminum added to reaction | | | | | | | | |
| d) triisobutylaluminum added to reaction | | | | | | | | |

### Example 16

In an argon atmosphere dry box, a dry 20 ml vial was charged with 2.2 mg (4.4 µmol) of bis(2,4,6 trimethylphenoxy)dibenzyltitanium and 3.8 mg (4.4 µmol) of ferrocenium tetra(pentafluorophenyl) boron. To this was added 1 ml of dry, degassed toluene. The mixture was allowed to interact while being stirred for ~30 minutes, after which time a dark insoluble, oily product had formed. Styrene was added to the flask (10 ml, 87.4 mmol) the vial was capped with a PTFE coated septum and a metal crimp cap, shaken until most of the complex had dissolved and then placed in a 70°C water bath for 1.5 hours. The vial was removed from the water bath and the polymerization stopped by the addition of 2 ml of methanol. The off white, insoluble polymer was dried *in-vacuo* to obtain 0.34 gms of a resultant polymer. The polymer was insoluble in methylene chloride, MEK or other common solvents for atactic polystyrene, and had a crystalline melting point of 259°C, which is consistent with a polymer having >90 percent syndiotacticity.

### Examples 17-22

### Pentamethylcyclopentadienyltribenzyltitanium Tetra(pentafluorophenyl)borate catalyzed polymerization of p-methylstyrene and t-butylstyrene

In an argon atmosphere dry box, a dry 20 ml vial was charged with a calculated amount of dried, degassed monomer to provide the monomer molar ratios indicated in Table III. The vial was capped with PTFE coated septum and a metal crimp clamp, then removed from the dry box. To this vial was added via syringe, 205 ul of a 0.0055 M catalyst solution consisting of the reaction product derived from pentamethylcyclopentadienetribenzyl titanium, decamethylferrocenium tetra(pentafluorophenyl) borate and 5 equivalents of triisobutyl aluminum in toluene at room temperature. The vial was then placed in a 70°C water bath for 1 hour. Polymerization was stopped by the addition of methanol. The polymer was washed with methanol and dried under reduced pressure.

Crystalline melting points were determined by differential scanning calorimetry, DSC. Results are contained in Table III.

**Table III**

| Ex. | Monomer | Ratio pMeSt:Al:Ti | Percent conv | DSC °C |
|---|---|---|---|---|
| 17 | p-methylstyrene | 67,400:5:1 | 50.3 | 169, 198 |
| 18 | p-methylstyrene | 120,200:5:1 | 14.1 | 167, 196 |
| 19 | p-methylstyrene/-styrene (9.5/90.5) | 78,000:5:1 | 55.0 | 238 |
| 20 | t-butylstyrene | 49,100:5:1 | 69.4 | 310 |
| 21 | t-butylstyrene | 125,700:5:1 | 64.8 | 310 |
| 22 | t-butylstyrene/-styrene (10.1/89.9) | 76,000:5:1 | 56.6 | --- |

## Claims (Claims for the following Contracting State(s): AT, BE, DE, ES, FR, GB, IT, NL, SE)

1. A process for preparing a syndiotactic polymer of a vinyl aromatic monomer said process comprising contacting one or more polymerizable vinyl aromatic monomers in the absence of other copolymerizable monomers under polymerization conditions with a catalyst characterized in that the catalyst comprises a metal complex of the formula:
[CpₘMXₙX'ₚ]⁺A⁻
wherein:
Cp is a single η⁵-cyclopentadienyl group which may optionally also be bonded to M through a substituent;
M is a metal of Group 3, 4, 5, 6, 8, 9, 10 or the Lanthanide Series of the Periodic Table;
each X independently is an inert anionic ligand or a group of formula R, with the proviso that at least one X is R;
X' is an inert, neutral donor ligand;
each R independently is hydride, or is hydrocarbyl or silyl, optionally substituted with one or more halogen atoms or alkoxy groups, and having up to 20 carbon and/or silicon atoms;
m and p are independently 0 or 1;
n is an integer greater than or equal to 1, the sum of m and n is one less than the valence of M, or when Cp is optionally bonded to M through the substituent, the sum of m and n is two less than the valence of M; and
A⁻ is a compatible noncoordinating anion.

2. A process according to Claim 1, wherein the monomer is contacted with the catalyst at a temperature from 0°C to 160°C.

3. A process according to Claim 1 or Claim 2, wherein the molar ratio of the vinyl aromatic monomer to the catalyst ranges from 100:1 to 500,000:1.

4. A process according to any one of the preceding claims, wherein the vinyl aromatic polymer is represented by the formula: 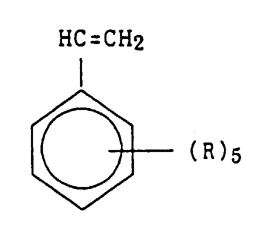 wherein each R is independently hydrogen; an aliphatic, cycloaliphatic or aromatic hydrocarbon group having from 1 to 10 carbon atoms; or a halogen atom.

5. A process according to Claim 4, wherein the vinyl aromatic monomer is styrene.

6. A process according to any one of the preceding claims, wherein m is 1 and the optionally substituted cyclopentadienyl group has the formula: 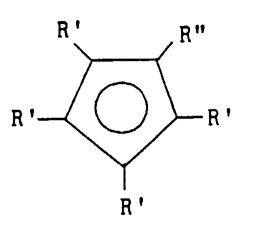 wherein:
each R' independently is hydrogen, halogen, R, NR₂, PR₂, OR, SR or BR₂, wherein R is as defined in Claim 1; and
R" is a group of the formula R' as defined above or a divalent group of from 2 to 7 nonhydrogen atoms that is covalently bonded to M.

7. A process according to Claim 6, wherein R' is alkyl or haloalkyl of up to 6 carbons, and R" is alkyl or haloalkyl of up to 6 carbons or C₂₋₅ oxyalkylene or alkylene.

8. A process according to any one of the preceding claims, wherein A⁻ is represented by the following general formula:
[BX₁X₂X₃X₄]⁻
wherein:
B is boron in a valence state of 3;
X₁ to X₄ are the same or different nonreactive, organyl or silyl radicals containing from 1 to 20 carbon or silicon atoms or two or more of X₁ to X₄ are linked to each other through a stable bridging group.

9. A process according to Claim 8, wherein X₁ to X₄ are perfluorinated hydrocarbyl radicals containing from 1 to 20 carbon atoms, 3,4,5-trifluorophenyl, and 3,4-di(trifluoromethyl)phenyl.

10. A process according to any one of the preceding claims, wherein M is titanium or zirconium.

11. A process according to any one of the preceding claims, wherein Cp is pentamethylcyclopentadiene.

12. A process according to any one of the preceding claims, wherein each X independently is R or OR, where R is as defined in Claim 1.

13. A process according to any one of the preceding claims, wherein A is tetrakis-pentafluorophenyl borate.

14. A process according to Claim 13, wherein Cp is pentamethylcyclopentadiene, m is 0 or 1, M is titanium or zirconium, n is two or three, p is zero, X is R or OR, wherein R is as defined in Claim 1.

15. A process according to Claim 14, wherein X is C₁₋₂₀ alkyl, aryl, aralkyl, phenoxyalkoxy and m is 0 or 1.

## Claims (Claims for the following Contracting State(s): CH, LI)

1. A process for preparing a syndiotactic polymer of a vinyl aromatic monomer said process comprising contacting a polymerizable vinyl aromatic monomer under polymerization conditions with a catalyst characterized in that the catalyst comprises a metal complex of the formula:
[CpₘMXₙX'ₚ]⁺A⁻
wherein:
Cp is a single η⁵-cyclopentadienyl group which may optionally also be bonded to M through a substituent;
M is a metal of Group 3, 4, 5, 6, 8, 9, 10 or the Lanthanide Series of the Periodic Table;
each X independently is an inert anionic ligand or a group of formula R, with the proviso that at least one X is R;
X' is an inert, neutral donor ligand;
each R independently is hydride, or is hydrocarbyl or silyl, optionally substituted with one or more halogen atoms or alkoxy groups, and having up to 20 carbon and/or silicon atoms;
m and p are independently 0 or 1;
n is an integer greater than or equal to 1, the sum of m and n is one less than the valence of M, or when Cp is optionally bonded to M through the substituent, the sum of m and n is two less than the valence of M; and
A⁻ is a compatible noncoordinating anion.

2. A process according to Claim 1, wherein one or more polymerizable vinyl aromatic monomers are polymerized in the absence of other copolymerizable monomers.

3. A process according to Claim 1 or Claim 2, wherein the monomer is contacted with the catalyst at a temperature from 0°C to 160°C.

4. A process according to any one of the preceding claims, wherein the molar ratio of the vinyl aromatic monomer to the catalyst ranges from 100:1 to 500,000:1.

5. A process according to any one of the preceding claims, wherein the vinyl aromatic polymer is represented by the formula: 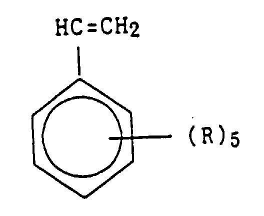 wherein each R is independently hydrogen; an aliphatic, cycloaliphatic or aromatic hydrocarbon group having from 1 to 10 carbon atoms; or a halogen atom.

6. A process according to Claim 5, wherein the vinyl aromatic monomer is styrene.

7. A process according to any one of the preceding claims, wherein m is 1 and the optionally substituted cyclopentadienyl group has the formula: 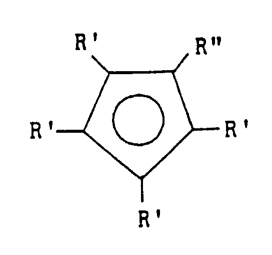 wherein:
each R' independently is hydrogen, halogen, R, NR₂, PR₂, OR, SR or BR₂, wherein R is as defined in Claim 1; and
R" is a group of the formula R' as defined above or a divalent group of from 2 to 7 nonhydrogen atoms that is covalently bonded to M.

8. A process according to Claim 7, wherein R' is alkyl or haloalkyl of up to 6 carbons, and R" is alkyl or haloalkyl of up to 6 carbons or C₂₋₅ oxyalkylene or alkylene.

9. A process according to any one of the preceding claims, wherein A⁻ is represented by the following general formula:
[BX₁X₂X₃X₄]⁻
wherein:
B is boron in a valence state of 3;
X₁ to X₄ are the same or different nonreactive, organyl or silyl radicals containing from 1 to 20 carbon or silicon atoms or two or more of X₁ to X₄ are linked to each other through a stable bridging group.

10. A process according to Claim 9, wherein X₁ to X₄ are perfluorinated hydrocarbyl radicals containing from 1 to 20 carbon atoms, 3,4,5-trifluorophenyl, and 3,4-di(trifluoromethyl)phenyl.

11. A process according to any one of the preceding claims, wherein M is titanium or zirconium.

12. A process according to any one of the preceding claims, wherein Cp is pentamethylcyclopentadiene.

13. A process according to any one of the preceding claims, wherein each X independently is R or OR, where R is as defined in Claim 1.

14. A process according to any one of the preceding claims, wherein A is tetrakis-pentafluorophenyl borate.

15. A process according to Claim 14, wherein Cp is pentamethylcyclopentadiene, m is 0 or 1, M is titanium or zirconium, n is two or three, p is zero, X is R or OR, wherein R is as defined in Claim 1.

16. A process according to Claim 15, wherein X is C₁₋₂₀ alkyl, aryl, aralkyl, phenoxyalkoxy and m is 0 or 1.

## Patentansprüche (Patentansprüche für folgende(n) Vertragsstaat(en): AT, BE, DE, ES, FR, GB, IT, NL, SE)

1. Verfahren zur Herstellung eines syndiotaktischen Polymers eines vinylaromatischen Monomeren, wobei dieses Verfahren umfaßt: Inkontaktbringen eines oder mehrerer polymerisierbarer, vinylaromatischer Monomeren in der Abwesenheit von anderen copolymerisierbaren Monomeren unter Polymerisationsbedingungen mit einem Katalysator,
**dadurch gekennzeichnet,**
daß der Katalysator einen Metallkomplex der Formel [CpₘMXₙX'ₚ]⁺A⁻ beinhaltet, worin:
Cp eine einzelne η⁵-Cyclopentadienylgruppe ist, die wahlweise ebenfalls an M über einen Substituenten gebunden sein kann,
M ein Metall der Gruppe 3, 4, 5, 6, 8, 9, 10 oder der Lanthanidenreihe des Periodensystems ist,
jedes X unabhängig ein inerter anionischer Ligand oder eine Gruppe der Formel R ist, unter der Voraussetzung, daß wenigstens ein X R ist,
X' ein inerter, neutraler Donorligand ist,
jedes R unabhängig Hydrid oder Hydrocarbyl oder Silyl ist, wahlweise substituiert mit einem oder mehreren Halogenatomen oder Alkoxygruppen, und bis zu 20 Kohlenstoff- und/oder Siliciumatome aufweist,
m und p unabhängig 0 oder 1 sind,
n eine ganze Zahl größer oder gleich 1 ist, die Summe von m und n eins weniger als die Valenz von M ist oder, wenn Cp wahlweise über einen Substituenten an M gebunden ist, die Summe von m und n zwei weniger als die Valenz von M ist, und
A⁻ ein kompatibles, nichtkoordinierendes Anion ist.

2. Verfahren nach Anspruch 1, wobei das Monomer mit dem Katalysator bei einer Temperatur von 0°C bis 160°C in Kontakt gebracht wird.

3. Verfahren nach Anspruch 1 oder Anspruch 2, wobei das molare Verhältnis des vinylaromatischen Monomeren zu dem Katalysator im Bereich von 100:1 bis 500.000:1 liegt.

4. Verfahren nach einem der vorstehenden Ansprüche, wobei das vinylaromatische Monomer durch die Formel 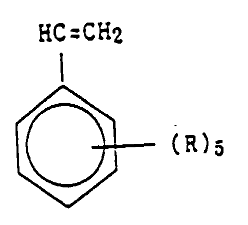 wiedergegeben ist, wobei jedes R unabhängig Wasserstoff, eine aliphatische, cycloaliphatische oder aromatische Kohlenwasserstoffgruppe mit 1 bis 10 Kohlenstoffatomen oder ein Halogenatom ist.

5. Verfahren nach Anspruch 4, wobei das vinylaromatische Monomer Styrol ist.

6. Verfahren nach einem der vorstehenden Ansprüche, wobei m gleich 1 ist und die wahlweise substituierte Cyclopentadienylgruppe der Formel 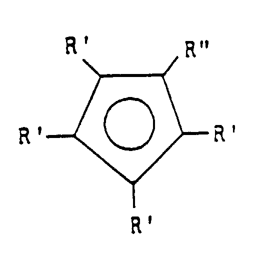 entspricht, worin
jedes R' unabhängig Wasserstoff, Halogen, R, NR₂, PR₂, OR, SR oder BR₂ ist, wobei R wie in Anspruch 1 definiert ist, und
R" eine Gruppe der Formel R', wie oben definiert, ist oder eine divalente Gruppe von 2 bis 7 Nichtwasserstoffatomen ist, die kovalent an M gebunden ist.

7. Verfahren nach Anspruch 6, wobei R' Alkyl oder Haloalkyl mit bis zu 6 Kohlenstoffatomen ist und R" Alkyl oder Haloalkyl mit bis zu 6 Kohlenstoffatomen oder C₂₋₅-Oxyalkylen oder -Alkylen ist.

8. Verfahren nach einem der vorstehenden Ansprüche, wobei A⁻ durch folgende allgemeine Formel [BX₁X₂X₃X₄]⁻ wiedergegeben ist, wobei
B Bor in einem Valenzzustand von 3 ist,
X₁ bis X₄ dieselben oder unterschiedliche, nichtreaktive Organyl- oder Silylreste mit 1 bis 20 Kohlenstoff- oder Siliciumatomen sind oder zwei oder mehrere der X₁ bis X₄ miteinander über eine stabile Verbrückungsgruppe verbunden sind.

9. Verfahren nach Anspruch 8, wobei X₁ bis X₄ perfluorierte Kohlenwasserstoffreste mit 1 bis 20 Kohlenstoffatomen, 3,4,5-Trifluorphenyl und 3,4-Di(trifluormethyl)phenyl sind.

10. Verfahren nach einem der vorstehenden Ansprüche, worin M Titan oder Zirkon ist.

11. Verfahren nach einem der vorstehenden Ansprüche, worin Cp Pentamethylcyclopentadien ist.

12. Verfahren nach einem der vorstehenden Ansprüche, worin jedes X unabhängig R oder OR ist, wobei R wie in Anspruch 1 definiert ist.

13. Verfahren nach einem der vorstehenden Ansprüche, worin A Tetrakispentafluorophenylborat ist.

14. Verfahren nach Anspruch 13, wobei Cp Pentamethylcyclopentadien ist, m gleich 0 oder 1 ist, M gleich Titan oder Zirkon ist, n gleich 2 oder 3 ist, p gleich Null ist, X gleich R oder OR ist, wobei R wie in Anspruch 1 definiert ist.

15. Verfahren nach Anspruch 14, wobei X gleich C₁₋₂₀-Alkyl, -Aryl, -Aralkyl, -Phenoxyalkoxy und m gleich Null oder 1 ist.

## Patentansprüche (Patentansprüche für folgende(n) Vertragsstaat(en): CH, LI)

1. Verfahren zur Herstellung eines syndiotaktischen Polymers eines vinylaromatischen Monomeren, wobei dieses Verfahren umfaßt: Inkontaktbringen eines polymerisierbaren, vinylaromatischen Monomers unter Polymerisationsbedingungen mit einem Katalysator,
**dadurch gekennzeichnet,**
daß der Katalysator einen Metallkomplex der Formel [CpₘMXₙX'ₚ]⁺A⁻ beinhaltet, worin:
Cp eine einzelne η⁵-Cyclopentadienylgruppe ist, die wahlweise ebenfalls an M über einen Substituenten gebunden sein kann,
M ein Metall der Gruppe 3, 4, 5, 6, 8, 9, 10 oder der Lanthanidenreihe des Periodensystems ist,
jedes X unabhängig ein inerter anionischer Ligand oder eine Gruppe der Formel R ist, unter der Voraussetzung, daß wenigstens ein X R ist,
X' ein inerter, neutraler Donorligand ist,
jedes R unabhängig Hydrid oder Hydrocarbyl oder Silyl ist, wahlweise substituiert mit einem oder mehreren Halogenatomen oder Alkoxygruppen, und bis zu 20 Kohlenstoff- und/oder Siliciumatome aufweist,
m und p unabhängig 0 oder 1 sind,
n eine ganze Zahl größer oder gleich 1 ist, die Summe von m und n eins weniger als die Valenz von M ist oder, wenn Cp wahlweise über einen Substituenten an M gebunden ist, die Summe von m und n zwei weniger als die Valenz von M ist, und
A⁻ ein kompatibles, nichtkoordinierendes Anion ist.

2. Verfahren nach Anspruch 1, wobei ein oder mehrere polymerisierbare, vinylaromatische Monomere in Abwesenheit anderer copolymerisierbarer Monomere polymerisiert werden.

3. Verfahren nach Anspruch 1 oder Anspruch 2, wobei das Monomer mit dem Katalysator bei einer Temperatur von 0°C bis 160°C in Kontakt gebracht wird.

4. Verfahren nach einem der vorstehenden Ansprüche, wobei das molare Verhältnis des vinylaromatischen Monomeren zu dem Katalysator im Bereich von 100:1 bis 500.000:1 liegt.

5. Verfahren nach einem der vorstehenden Ansprüche, wobei das vinylaromatische Monomer durch die Formel 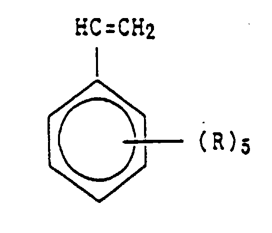 wiedergegeben ist, wobei jedes R unabhängig Wasserstoff, eine aliphatische, cycloaliphatische oder aromatische Kohlenwasserstoffgruppe mit 1 bis 10 Kohlenstoffatomen oder ein Halogenatom ist.

6. Verfahren nach Anspruch 5, wobei das vinylaromatische Monomer Styrol ist.

7. Verfahren nach einem der vorstehenden Ansprüche, wobei m gleich 1 ist und die wahlweise substituierte Cyclopentadienylgruppe der Formel 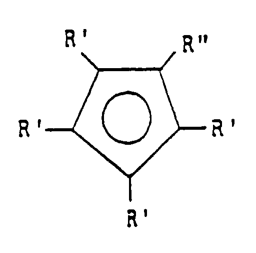 entspricht, worin
jedes R' unabhängig Wasserstoff, Halogen, R, NR₂, PR₂, OR, SR oder BR₂ ist, wobei R wie in Anspruch 1 definiert ist, und
R" eine Gruppe der Formel R', wie oben definiert, ist oder eine divalente Gruppe von 2 bis 7 Nichtwasserstoffatomen ist, die kovalent an M gebunden ist.

8. Verfahren nach Anspruch 7, wobei R' Alkyl oder Haloalkyl mit bis zu 6 Kohlenstoffatomen ist und R" Alkyl oder Haloalkyl mit bis zu 6 Kohlenstoffatomen oder C₂₋₅-Oxyalkylen oder -Alkylen ist.

9. Verfahren nach einem der vorstehenden Ansprüche, wobei A⁻ durch folgende allgemeine Formel [BX₁X₂X₃X₄]⁻ wiedergegeben ist, wobei
B Bor in einem Valenzzustand von 3 ist,
X₁ bis X₄ dieselben oder unterschiedliche, nichtreaktive Organyl- oder Silylreste mit 1 bis 20 Kohlenstoff- oder Siliciumatomen sind oder zwei oder mehrere der X₁ bis X₄ miteinander über eine stabile Verbrückungsgruppe verbunden sind.

10. Verfahren nach Anspruch 9, wobei X₁ bis X₄ perfluorierte Kohlenwasserstoffreste mit 1 bis 20 Kohlenstoffatomen, 3,4,5-Trifluorphenyl und 3,4-Di(trifluormethyl)phenyl sind.

11. Verfahren nach einem der vorstehenden Ansprüche, worin M Titan oder Zirkon ist.

12. Verfahren nach einem der vorstehenden Ansprüche, worin Cp Pentamethylcyclopentadien ist.

13. Verfahren nach einem der vorstehenden Ansprüche, worin jedes X unabhängig R oder OR ist, wobei R wie in Anspruch 1 definiert ist.

14. Verfahren nach einem der vorstehenden Ansprüche, worin A Tetrakispentafluorophenylborat ist.

15. Verfahren nach Anspruch 14, wobei Cp Pentamethylcyclopentadien ist, m gleich 0 oder 1 ist, M gleich Titan oder Zirkon ist, n gleich 2 oder 3 ist, p gleich Null ist, X gleich R oder OR ist, wobei R wie in Anspruch 1 definiert ist.

16. Verfahren nach Anspruch 15, wobei X gleich C₁₋₂₀-Alkyl, -Aryl, -Aralkyl, -Phenoxyalkoxy und m gleich Null oder 1 ist.

## Revendications (Revendications pour l'(les) Etat(s) contractant(s) suivant(s): AT, BE, DE, ES, FR, GB, IT, NL, SE)

1. Procédé de préparation d'un polymère syndiotactique d'un monomère vinylaromatique, ledit procédé comportant le fait de mettre en contact un ou plusieurs monomères vinylaromatiques polymérisables en l'absence d'autres monomères copolymérisables sous des conditions de polymérisation avec un catalyseur, caractérisé par le fait que le catalyseur comporte un complexe
[CpₘMXₙX'ₚ]⁺A⁻
dans laquelle
Cp est un radical η⁵-cyclopentadiényle unique qui peut également éventuellement être lié à M par l'intermédiaire d'un substituant;
M est un métal des groupes 3, 4, 5, 6, 8, 9, 10 ou de la série des lanthanides du Tableau Périodique;
chaque X est, indépendamment, un ligand anionique inerte ou un radical de formule R, à condition qu'au moins un des X soit R;
X' est un ligand donneur neutre, inerte;
chaque R est, indépendamment, un hydrure ou un radical hydrocarbyle ou silyle, éventuellement. substitué par un ou plusieurs atomes d'halogène ou un radical alkoxy et contenant jusqu'à 20 atomes de carbone et/ou de silicium;
m et p sont indépendamment 0 ou 1;
n est un entier supérieur ou égal à 1; et
la somme de m et n est inférieure de un à la valence de M ou, lorsque Cp est, éventuellement, lié à M par l'intermédiaire du substituant, la somme de m et n est inférieure de deux à la valence de M; et
A- est un anion compatible non coordiné.

2. Procédé selon la revendication 1. dans lequel on met en contact le monomère avec le catalyseur à une température comprise entre 0°C et 160°C.

3. Procédé selon la revendication 1 ou la revendication 2, dans lequel le rapport molaire entre le monomère vinylaromatique et le catalyseur est compris entre 100:1 et 500 000:1.

4. Procédé selon l'une des revendications précédentes, dans lequel le monomère vinylaromatique est représenté par la formule: 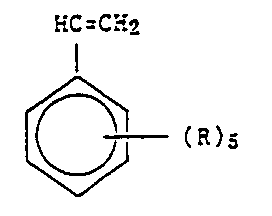 dans laquelle chaque R est, indépendamment, l'hydrogène; un groupe aliphatique, cycloaliphatique ou aromatique hydrocarboné contenant de 1 à 10 atomes de carbone; ou un atome d'halogène.

5. Procédé selon la revendication 4, dans lequel le monomère vinylaromatique est le styrène.

6. Procédé selon l'une des revendications précédentes dans lequel m vaut 1 et dans lequel le radical cyclopentadiényle éventuellement substitué a pour formule: 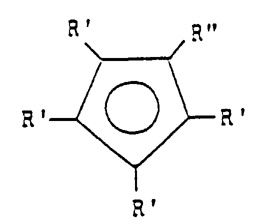 dans laquelle chaque R' est, indépendamment, l'hydrogène, un halogène, R, NR_{2,} PR₂, OR, SR ou BR₂, où R est comme défini dans la revendication 1; et
R" est un radical de la formule R' comme défini ci-dessus ou un groupe divalent contenant de 2 à 7 atomes autres que l'hydrogène qui est lié à M de façon covalente.

7. Procédé selon la revendication 6, dans lequel R' est un radical alkyle ou halogénoalkyle contenant jusqu'à 6 carbones et R" est un radical alkyle ou halogénoalkyle contenant jusqu'à 6 carbones ou un oxyalkylène ou un alkylène en C₂₋₅.

8. Procédé selon l'une des revendications précédentes dans lequel A⁻ est représenté par le formule générale suivante:
[BX₁X₂X₃X₄]⁻
dans laquelle
B est le bore à l'état de valence 3;
X₁ à X₄ sont des radicaux organyle ou silyle, identiques ou différents, non réactifs, contenant de 1 à 20 atomes de carbone ou de silicium ou bien deux, ou davantage, de X₁ à X₄ sont liés l'un à l'autre par l'intermédiaire d'un radical de pontage stable.

9. Procédé selon la revendication 8, dans lequel X₁ à X₄ sont des radicaux hydrocarbyle perfluorés contenant de 1 à 20 atomes de carbone, le 3,4,5-trifluorophényle et le 3,4-di(trifluorométhyl)phényle.

10. Procédé selon l'une des revendications précédentes, dans lequel M est le titane ou le zirconium.

11. Procédé selon l'une des revendications précédentes, dans lequel Cp est le pentaméthycydopentadiène.

12. Procédé selon l'une des revendications précédentes, dans lequel chaque X est, indépendamment, R ou OR, où R est comme défini dans la revendication 1.

13. Procédé selon l'une des revendications précédentes, dans lequel A est un tétrakis-pentafluorophényl borate.

14. Procédé selon la revendication 13, dans lequel Cp est le pentaméthylcyclopentadiène, m vaut 0 ou 1, M est le titane ou le zirconium, n vaut deux ou trois, p vaut zéro, X est R ou OR, où R est comme défini dans la revendication 1.

15. Procédé selon la revendication 14, dans lequel X est un radical alkyle en C₁₋₂₀, aryle, aralkyle, phénoxyalkoxy et m vaut 0 ou 1.

## Revendications (Revendications pour l'(les) Etat(s) contractant(s) suivant(s): CH, LI)

1. Procédé de préparation d'un polymère syndiotactique d'un monomère vinylaromatique, ledit procédé comportant le fait de mettre en contact un ou plusieurs monomères vinylaromatiques polymérisables sous des conditions de polymérisation avec un catalyseur, caractérisé par le fait que le catalyseur comporte un complexe métallique de formule:
[CpₘMXₙX'ₚ]⁺A⁻
dans laquelle
Cp est un radical η⁵-cydopentadiényle unique qui peut également éventuellement être lié à M par l'intermédiaire d'un substituant;
M est un métal des groupes 3, 4, 5, 6, 8, 9, 10 ou de la série des lanthanides du Tableau Périodique:
chaque X est, indépendamment, un ligand anionique inerte ou un radical de formule R, à condition qu'au moins un des X soit R;
X' est un ligand donneur neutre, inerte;
chaque R est, indépendamment, un hydrure ou un radical hydrocarbyle ou silyle, éventuellement substitué par un ou plusieurs atomes d'halogène ou un radical alkoxy et contenant jusqu'à 20 atomes de carbone et/ou de silicium;
m et p sont indépendamment 0 ou 1;
n est un entier supérieur ou égal à 1; et
la somme de m et n est inférieure de un à la valence de M ou, lorsque Cp est, éventuellement, lié à M par l'intermédiaire du substituant, la somme de m et n est inférieure de deux à la valence de M; et
A⁻ est un anion compatible non coordiné.

2. Procédé selon la revendication 1, dans lequel un ou plusieurs monomères vinylaromatiques polymérisables sont copolymérisés en l'absence d'autres monomères copolymérisables.

3. Procédé selon la revendication 1 ou la revendication 2. dans lequel on met en contact le monomère avec le catalyseur à une température comprise entre 0°C et 160°C.

4. Procédé selon l'une des revendications précédentes, dans lequel le rapport molaire entre le monomère vinylaromatique et le catalyseur est compris entre 100:1 et 500 000:1.

5. Procédé selon l'une des revendications précédentes. dans lequel le monomère vinylaromatique est représenté par la formule: 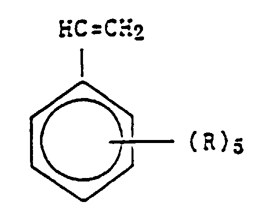 dans laquelle chaque R est, indépendamment, l'hydrogène; un groupe aliphatique, cycloaliphatique ou aromatique hydrocarboné contenant de 1 à 10 atomes de carbone; ou un atome d'halogène.

6. Procédé selon la revendication 5, dans lequel le monomère vinylaromatique est le styrène.

7. Procédé selon l'une des revendications précédentes dans lequel m vaut 1 et dans lequel le radical cyclopentadiényle éventuellement substitué a pour formule: 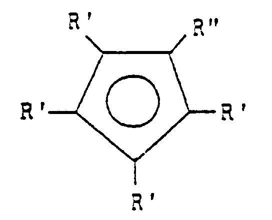 dans laquelle chaque R' est, indépendamment, l'hydrogène, un halogène, R, NR₂, PR₂, OR, SR ou BR₂, où R est comme défini dans la revendication 1; et
R" est un radical de la formule R' comme défini ci-dessus ou un groupe divalent contenant de 2 à 7 atomes autres que l'hydrogène qui est lié à M de façon covalente.

8. Procédé selon la revendication 7, dans lequel R' est un radical alkyle ou halogénoalkyle contenant jusqu'à 6 carbones et R" est un radical alkyle ou halogénoalkyle contenant jusqu'à 6 carbones ou un oxyalkylène ou un alkylène en C₂₋₅.

9. Procédé selon l'une des revendications précédentes dans lequel A⁻ est représenté par le formule générale suivante:
[BX₁X₂X₃X₄]⁻
dans laquelle
B est le bore à l'état de valence 3;
X₁ à X₄ sont des radicaux organyle ou silyle, identiques ou différents, non réactifs, contenant de 1 à 20 atomes de carbone ou de silicium ou bien deux, ou davantage, de X₁ à X₄ sont liés l'un à l'autre par l'intermédiaire d'un radical de pontage stable.

10. Procédé selon la revendication 9, dans lequel X₁ à X₄ sont des radicaux hydrocarbyle perfluorés contenant de 1 à 20 atomes de carbone, le 3,4,5-trifluorophényle et le 3,4-di(trifluorométhyl)phényle.

11. Procédé selon l'une des revendications précédentes, dans lequel M est le titane ou le zirconium.

12. Procédé selon l'une des revendications précédentes, dans lequel Cp est le pentaméthycyclopentadiène.

13. Procédé selon l'une des revendications précédentes, dans lequel chaque X est, indépendamment, R ou OR, où R est comme défini dans la revendication 1.

14. Procédé selon l'une des revendications précédentes, dans lequel A est un tétrakis-pentafluorophényl borate.

15. Procédé selon la revendication 14, dans lequel Cp est le pentaméthylcyclopentadiène, m vaut 0 ou 1, M est le titane ou le zirconium, n vaut deux ou trois, p vaut zéro, X est R ou OR, où R est comme défini dans la revendication 1.

16. Procédé selon la revendication 15, dans lequel X est un radical alkyle en C₁₋₂₀, aryle, aralkyle, phénoxyalkoxy et m vaut 0 ou 1.
